(19) Europäisches Patentamt
European Patent Office
Office européen des brevets

(11) **EP 3 149 795 B1**

(12) **FASCICULE DE BREVET EUROPEEN**

(45) Date de publication et mention de la délivrance du brevet:
**21.03.2018 Bulletin 2018/12**

(21) Numéro de dépôt: **15725610.8**

(22) Date de dépôt: **27.05.2015**

(51) Int Cl.:
*H01M 8/0213* (2016.01)   *H01M 8/0221* (2016.01)
*H01M 8/0226* (2016.01)   *H01M 8/1011* (2016.01)

(86) Numéro de dépôt international:
**PCT/EP2015/061716**

(87) Numéro de publication internationale:
**WO 2015/181238 (03.12.2015 Gazette 2015/48)**

(54) **PROCÉDÉ DE FABRICATION D'UNE PLAQUE BIPOLAIRE COMPOSITE, PLAQUE BIPOLAIRE COMPOSITE, SES UTILISATIONS ET PILE À COMBUSTIBLE COMPRENANT UNE TELLE PLAQUE BIPOLAIRE COMPOSITE**

VERFAHREN ZUR HERSTELLUNG EINER ZUSAMMENGESETZTEN BIPOLARPLATTE, ZUSAMMENGESETZTE BIPOLARPLATTE, VERWENDUNGEN DAVON UND BRENNSTOFFZELLE MIT EINER DERARTIGEN ZUSAMMENGESETZTEN BIPOLARPLATTE

METHOD FOR MANUFACTURING A COMPOSITE BIPOLAR PLATE, COMPOSITE BIPOLAR PLATE, USES THEREOF AND FUEL CELL COMPRISING SUCH A COMPOSITE BIPOLAR PLATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.05.2014 FR 1454768**

(43) Date de publication de la demande:
**05.04.2017 Bulletin 2017/14**

(73) Titulaire: **Commissariat à l'Énergie Atomique et aux Énergies Alternatives**
**75015 Paris (FR)**

(72) Inventeurs:
• **BUVAT, Pierrick**
**37250 Montbazon (FR)**
• **TONEGUZZO, Philippe**
**37000 Tours (FR)**
• **DAGAZ, Sébastien**
**73360 Les Echelles (FR)**
• **PAGE, Brice**
**37260 Artannes sur Indre (FR)**

(74) Mandataire: **Brevalex**
**95, rue d'Amsterdam**
**75378 Paris Cedex 8 (FR)**

(56) Documents cités:
| | |
|---|---|
| **EP-A1- 1 750 320** | **EP-A1- 2 717 369** |
| **EP-A2- 1 248 311** | **JP-A- 2006 294 407** |
| **US-A1- 2003 027 030** | **US-A1- 2012 038 079** |

**Description**

**DOMAINE TECHNIQUE**

La présente invention concerne le domaine des piles à combustible et, notamment, celui des piles à combustible à membrane d'échange de protons, également connues sous la terminologie de piles à combustible à membrane électrolyte polymère (en anglais, proton exchange membrane fuel cells ou Polymer Electrolyte Membrane Fuels Cells et abrégé PEMFC). Parmi les piles du type PEMFC, on peut citer les piles à combustible à méthanol direct (en anglais, Direct-Methanol Fuel Cell et abrégé DMFC).

Ces piles à combustible PEMFC et DMFC sont constituées par un empilement de cellules électrochimiques élémentaires, également appelées assemblages membrane électrodes et abrégées AME. Ces cellules électrochimiques élémentaires ou AME sont formées d'une anode, d'une cathode et d'une membrane électrolyte disposée entre lesdites anode et cathode, cette membrane électrolyte conduisant les protons.

Les cellules électrochimiques élémentaires ou AME sont séparées les unes des autres par des plaques bipolaires. De telles plaques bipolaires peuvent être réalisées en métal, en graphite ou encore en un matériau composite, c'est-à-dire en un matériau obtenu à partir d'une composition comprenant du graphite et un polymère thermoplastique ou thermodurcissable. Lorsque la plaque bipolaire est réalisée en un tel matériau composite, on parle alors de *"plaque bipolaire composite"*.

L'invention se rapporte plus particulièrement à un procédé de fabrication d'une plaque bipolaire composite, une telle plaque bipolaire composite étant destinée à entrer dans la constitution de piles à combustible et, notamment, de piles à combustible du type PEMFC et DMFC.

**ÉTAT DE LA TECHNIQUE ANTÉRIEURE**

Les piles à combustible du type PEMFC sont des dispositifs qui produisent simultanément de l'électricité et de la chaleur, par réaction électrochimique entre les protons $H^+$ issus de l'oxydation du dihydrogène $H_2$ à l'anode qui, après avoir migré au travers de la membrane électrolyte échangeuse de protons, vont réagir avec le dioxygène $O_2$ à la cathode.

Comme indiqué précédemment, de telles piles à combustibles sont constituées par un empilement de cellules électrochimiques élémentaires ou AME, séparées les unes des autres par des plaques bipolaires.

Ces plaques bipolaires ont plusieurs fonctions.

La première fonction de ces plaques bipolaires est d'alimenter la pile à combustible en gaz carburant (du dihydrogène $H_2$ ou du méthanol dans le cas d'une pile du type DMFC) et en gaz comburant (du dioxygène $O_2$, pur ou présent dans l'air) mais également d'évacuer les produits de réaction générés par les réactions électrochimiques se produisant au sein des AME de la pile à combustible, tels que l'eau, la chaleur et les gaz non consommés. Les plaques bipolaires doivent également être refroidies et, de ce fait, comprennent, en outre, une circulation de fluide caloporteur, tel qu'un liquide de refroidissement.

Pour assurer cette première fonction, les plaques bipolaires, qui se présentent classiquement sous la forme de pièces de forme parallélépipédique et d'une épaisseur de quelques millimètres (typiquement comprise entre 0,2 mm et 6,0 mm), comprennent, sur chacune de leurs faces, des réseaux de canaux qui permettent la distribution des gaz carburant et comburant, la circulation du fluide de refroidissement ainsi que l'évacuation des gaz non consommés et des produits de réaction générés par les réactions électrochimiques mises en jeu.

En plus de permettre l'acheminement, la circulation et l'évacuation des différents fluides, les plaques bipolaires assurent une deuxième fonction d'ordre mécanique. En effet, les plaques bipolaires doivent présenter des caractéristiques mécaniques suffisantes pour permettre la juxtaposition d'un grand nombre d'AME, leur maintien, notamment par compression entre les deux plaques d'extrémité, ainsi que la cohésion de l'ensemble qu'elles forment avec ces AME.

Par ailleurs, les plaques bipolaires ont encore pour troisième fonction d'assurer la conduction électrique entre l'anode et la cathode de chacune des AME adjacentes et de collecter le courant électrique produit lors des réactions électrochimiques.

Ainsi, pour assurer ces différentes fonctions de circulation des fluides, de cohésion mécanique et de conduction électrique, les plaques bipolaires doivent, notamment et de manière cumulative, présenter une bonne conductivité électrique planaire, être étanches aux différents fluides qui y circulent ainsi que présenter une stabilité chimique vis-à-vis de ces différents fluides, gaz et autres liquides, tels que l'eau et/ou le liquide de refroidissement. A titre d'exemple, une bonne conductivité électrique planaire signifie que cette dernière est supérieure ou égale à 70 S/cm, avantageusement supérieure ou égale à 80 S/cm et, de manière préférentielle, supérieure ou égale à 100 S/cm.

Comme mentionné précédemment, les plaques bipolaires peuvent être réalisées en métal, en graphite ou encore en un matériau composite.

Les plaques bipolaires métalliques, en général en acier inoxydable, sont satisfaisantes en termes de résistance mécanique et de conductivité électrique planaire. Toutefois, leur résistance chimique reste insuffisante. Ainsi, au cours du temps, on observe la formation d'une couche superficielle résistive à la surface des plaques bipolaires métalliques ainsi que le relargage d'ions métalliques qui viennent perturber le fonctionnement de la membrane électrolyte des AME. Pour remédier à ces inconvénients majeurs, on peut procéder au dépôt, sur les faces externes des plaques bipolaires métalliques, d'une couche conductrice de protection, par exemple en carbone ou en un métal précieux, ce qui n'est pas sans incidence sur le coût global du procédé de fabrication de telles plaques bipolaires composites ainsi revêtues.

Si les plaques bipolaires réalisées en graphite présentent, quant à elles, une bonne résistance à la corrosion ainsi qu'une bonne conductivité électrique planaire, elles demeurent néanmoins fragiles et ont un coût de fabrication prohibitif lié à l'usinage des réseaux de canaux de distribution, de circulation et d'évacuation des différents fluides impliqués dans une pile à combustible.

Les plaques bipolaires composites, qui présentent de bonnes propriétés mécaniques, sont fabriquées à partir de compositions comprenant un fort pourcentage massique d'au moins une charge électriquement conductrice et un polymère, qui peut être un polymère thermoplastique ou un polymère thermodurcissable. Les procédés de fabrication de telles plaques bipolaires composites comprennent, de manière classique, une étape de transformation par injection, qui présente l'avantage de permettre des cadences de production élevées, ou par thermocompression. Dans le cas d'une étape de transformation par thermocompression, la composition est introduite dans un moule avantageusement doté d'une empreinte imprimant, auxdites plaques bipolaires composites, les réseaux de canaux de distribution, de circulation et d'évacuation des différents fluides.

Les charges électriquement conductrices confèrent aux plaques bipolaires composites une bonne conductivité électrique planaire tandis que le polymère thermoplastique ou thermodurcissable apporte une stabilité chimique vis-à-vis des fluides impliqués dans les piles à combustible et participe à la bonne tenue mécanique des plaques bipolaires composites.

Toutefois, s'il est avéré que l'augmentation du pourcentage massique en charges électriquement conductrices améliore les propriétés de conductivité électrique dont celles de conductivité électrique planaire, on observe que cette amélioration se fait au détriment des propriétés mécaniques et des propriétés d'étanchéité aux gaz des plaques bipolaires composites fabriquées à partir de telles compositions. En outre, seul un procédé de fabrication mettant en oeuvre une étape de transformation par thermocompression reste envisageable car, au-delà d'un certain pourcentage massique en charges électriquement conductrices, la transformation par injection devient impossible en raison de la forte augmentation de la viscosité de la composition en fonction de l'augmentation dudit pourcentage massique.

Le document US 7,494,740, référencé [1] à la fin de la présente description, décrit un procédé de fabrication d'une plaque bipolaire composite, par extrusion ou par injection, d'une poudre micro-composite à base de plaquettes de graphite et d'un fluoropolymère. Bien que l'injection d'une telle poudre micro-composite, notamment à 240°C dans une presse à injecter avec une vis présentant un profil de type PVC, soit décrite dans le document [1], l'expérience montre que l'injection, qui est un procédé de transformation présentant l'avantage d'assurer une cadence de fabrication plus élevée que l'extrusion, n'est industriellement pas envisageable.

Cette poudre micro-composite comprend :

- des plaquettes de graphite, notées $G_{LP}$, de 50 $\mu$m à 1000 $\mu$m de côté et de 5 $\mu$m à 50 $\mu$m d'épaisseur, constituées d'agglomérats de particules de graphite plus élémentaires accolées et superposées de façon à ce que leurs plans principaux soient parallèles entre eux,

- ces plaquettes de graphite $G_{LP}$ étant, en outre, recouvertes de particules de 0,1 $\mu$m à 0,5 $\mu$m d'un fluoropolymère.

Ces particules de graphite plus élémentaires agglomérées sont constituées de plaquettes élémentaires de graphite expansé de 5 $\mu$m à 20 $\mu$m de côté et de 0,1 $\mu$m à 5 $\mu$m d'épaisseur.

La poudre micro-composite décrite dans le document [1] peut, en outre, comprendre un graphite naturel ou synthétique de forme lamellaire, noté G1, ayant une taille de particules comprise entre 10 $\mu$m et 600 $\mu$m, ce graphite G1 étant recouvert de particules de 0,1 $\mu$m à 0,5 $\mu$m d'un fluoropolymère.

De manière avantageuse, la poudre micro-composite décrite dans le document [1] comprend un pourcentage massique de 10% à 40% de fluoropolymère pour un pourcentage massique de 60% à 90% de plaquettes de graphite $G_{LP}$ et, le cas échéant, de graphite de forme lamellaire G1.

Le procédé de fabrication d'une plaque bipolaire composite décrit dans le document [1] réalise un mélange formé par une dispersion aqueuse comprenant des plaquettes de graphite de caractéristiques dimensionnelles de 100 $\mu$m à 1000 $\mu$m avec des particules en moyenne de 300 $\mu$m de côté, un deuxième graphite de caractéristiques dimensionnelles de 10 $\mu$m à 80 $\mu$m de côté avec une moyenne de 30 $\mu$m, une émulsion de polyfluorure de vinylidène (PVDF), un agent anti-mousse et un surfactant, mélange qui est ensuite pompé puis co-atomisé sous forme d'une poudre. Cette poudre est alors pressée à 1 T/cm$^2$ et à 185°C pour former une plaque bipolaire composite.

Le document [1] précise que les plaques bipolaires composites obtenues présentent une conductivité surfacique élevée, notamment de 50 S/cm et de 130 S/cm, ainsi que des conductivités thermiques, transversale et longitudinale, respectivement comprises entre 2 W/m.K et 50 W/m.K, d'une part, et entre 10 W/m.K et 200 W/m.K, d'autre part. En outre, ce document [1] ajoute que de telles plaques peuvent être très imperméables ou, au contraire, poreuses selon les conditions de mise en oeuvre. Toutefois, ce document ne donne aucune précision quant à de telles conditions de mise en oeuvre, si ce n'est l'addition d'un agent porogène dans la poudre micro-composite. Au demeurant, rien dans le document [1] n'indique qu'en l'absence d'un tel agent porogène, l'on obtienne une plaque bipolaire composite qui présente une étanchéité aux gaz satisfaisante.

Par ailleurs, l'expérience montre que l'agent anti-mousse mis en oeuvre dans le procédé de fabrication d'une plaque bipolaire composite décrit dans le document [1] provoque une chute des performances de ces plaques lorsque ces dernières sont utilisées dans une pile à combustible. En effet, lors du fonctionnement d'une pile à combustible comprenant des plaques bipolaires composites selon l'enseignement du document [1], se produit un phénomène d'exsudation de cet agent anti-mousse. Ce phénomène d'exsudation engendre une modification notable des propriétés de ces plaques bipolaires composites qui, devenant très hydrophiles, se révèlent inaptes à assurer la circulation et l'évacuation des certains fluides tels que les fluides aqueux et, en particulier, l'eau générée par les réactions électrochimiques. En d'autres termes, la présence résiduelle de l'agent anti-mousse mis en oeuvre dans le procédé de fabrication tel qu'enseigné dans le document [1] provoque un "noyage" de la pile à combustible.

Le but de la présente invention est, par conséquent, de remédier aux inconvénients présentés par le procédé décrit dans le document [1] et de proposer un procédé qui permette, à partir d'une composition comprenant au moins une charge électriquement conductrice et un polymère, de fabriquer une plaque bipolaire composite présentant simultanément l'ensemble des caractéristiques suivantes :

- une conductivité électrique planaire élevée, typiquement supérieure ou égale à 70 S/cm, avantageusement supérieure ou égale à 80 S/cm et, préférentiellement, supérieure ou égale à 100 S/cm, directement liée à un pourcentage massique en charges électriquement conductrices qui doit être d'au moins 70% par rapport à la masse totale de la composition,
- une très bonne étanchéité aux gaz et, en particulier, au dihydrogène et au dioxygène, étant précisé que cette étanchéité aux gaz est évaluée au regard d'un taux de rebut au test d'étanchéité aux gaz qui sera détaillé ci-après,

ce procédé permettant, par ailleurs, de fabriquer lesdites plaques bipolaires composites avec une productivité parfaitement compatible avec une production industrielle et, notamment, avec un temps de cycle de fabrication inférieur à celui du procédé de fabrication par extrusion décrit dans le document [1], ce temps de cycle de fabrication étant avantageusement inférieur à 5 minutes.

Ce procédé selon l'invention doit, en outre, permettre de fabriquer une plaque bipolaire composite susceptible d'être mise en oeuvre dans une pile à combustible, sans risque de noyage de cette dernière.

Un autre procédé de fabrication d'une plaque bipolaire est également décrit dans le document EP1750320.

## EXPOSÉ DE L'INVENTION

Le but, ainsi que d'autres, sont atteints, en premier lieu, par un procédé de fabrication d'une plaque bipolaire composite à partir d'une composition du type précité, c'est-à-dire comprenant au moins une charge électriquement conductrice et un polymère.

Selon l'invention, le procédé de fabrication d'une plaque bipolaire composite est réalisé à partir d'une composition comprenant au moins un graphite lamellaire et au moins un polymère thermoplastique, et comprend les étapes successives suivantes :

(a) le tamisage à sec de la composition au moyen d'un tamis dont le diamètre de mailles est inférieur ou égal à 1000 $\mu$m,
(b) le mélangeage à sec de la composition tamisée,
(c) le dépôt de la composition mélangée dans un moule, ce moule étant de préférence préchauffé,
(d) le moulage par thermocompression de la composition avec chauffage par induction du moule, et
(e) le démoulage de la composition thermocomprimée conduisant à l'obtention de la plaque bipolaire composite.

Les inventeurs ont observé que, de manière inattendue et surprenante, la combinaison des étapes d'homogénéisation (a) et (b) et de moulage par thermocompression avec chauffage par induction (d) permettent de fabriquer une plaque bipolaire composite qui se caractérise par l'absence de porosité ouverte, favorisant ainsi l'étanchéité de la plaque polaire composite aux gaz comme le dihydrogène et le dioxygène et, de manière plus générale, aux fluides qui sont destinés à circuler dans les réseaux de canaux de cette plaque polaire composite.

En outre, on observe que le procédé selon l'invention permet également de fabriquer une plaque bipolaire composite qui présente une répartition homogène et régulière du graphite lamellaire dans toute l'épaisseur de la plaque bipolaire composite, en l'absence de formation d'une couche superficielle résistive de polymère thermoplastique liée à la diffusion dudit polymère thermoplastique telle qu'elle se produit lors d'une étape de moulage par thermocompression conventionnel au cours duquel le chauffage du moule est assuré par convexion ou par conduction. Cette répartition homogène et régulière est observable à une échelle submillimétrique, c'est-à-dire à une échelle inférieure au millimètre et, typiquement, à une échelle de l'ordre de 100 µm. Grâce au procédé selon l'invention, on obtient une plaque bipolaire composite dotée d'une excellente conductivité électrique planaire, typiquement supérieure ou égale à 80 S/cm, voire supérieure ou égale à 100 S/cm, en l'absence de toute étape complémentaire visant à éliminer cette couche superficielle résistive, par exemple par abrasion ou encore par usinage. La plaque bipolaire composite telle qu'obtenue par le procédé de fabrication selon l'invention est, en outre, dotée d'une excellente conductivité électrique transversale, typiquement supérieure ou égale à 15 S/cm, ainsi que d'une excellente conductivité thermique transversale, typiquement supérieure ou égale à 12 W/m.K. Une telle plaque bipolaire composite est donc en tout point conforme aux exigences du Département de l'Energie (DOE) des Etats-Unis.

Le procédé selon l'invention permet donc de fabriquer des plaques bipolaires composites d'excellente qualité, avec une productivité supérieure à celle des procédés actuels et, notamment, avec une productivité qui ne peut pas être atteinte avec le procédé de fabrication par extrusion décrit dans le document [1], rendant le procédé selon l'invention très intéressant du point de vue d'une production industrielle.

La composition comprend au moins un graphite lamellaire spécifique et au moins un polymère thermoplastique, chacun de ces composés se présentant sous la forme d'une poudre.

Avant de procéder à l'étape (a) de tamisage de la composition, il est tout à fait envisageable de procéder à un premier mélange, ou pré-mélange, des poudres de graphite lamellaire et de polymère thermoplastique.

Un tel pré-mélange peut être effectué manuellement ou au moyen d'un mélangeur à poudre du type Turbula®. Toutefois, il est précisé qu'un pré-mélange manuel suffit à optimiser le temps d'obtention de la composition mélangée à déposer dans le moule. A titre d'exemple, un pré-mélange manuel d'une durée d'1 min permet un gain de temps de 20 min pour l'obtention d'une telle composition mélangée.

L'étape (a) de tamisage à sec de la composition peut être réalisée au moyen d'une tamiseuse qui peut être automatique et qui peut avantageusement être équipée d'un dispositif de décolmatage, un tel dispositif permettant le retrait progressif des poudres qui viendraient à se colmater sur le tamis au cours de l'étape (a) de tamisage à sec. On peut notamment et avantageusement utiliser une tamiseuse automatique équipée d'un dispositif de décolmatage du type Ro-Tap®.

Dans une variante avantageuse du procédé selon l'invention, le diamètre de mailles du tamis mis en oeuvre dans l'étape (a) est choisi de manière à être du même ordre de grandeur, voire légèrement supérieur, à la taille moyenne de particules telle que présentée par au moins 90% des particules en nombre des composés présents dans la composition.

Il est précisé que cette taille moyenne de particules présentée par au moins 90% des particules en nombre est, par la suite, notée "$d_{90}$" dans la présente demande.

Ce diamètre de maille dudit tamis mis en oeuvre lors de l'étape (a) peut, en particulier, être compris entre 100 µm et 600 µm, avantageusement entre 200 µm et 500 µm et, préférentiellement, entre 250 µm et 400 µm.

Il est également précisé que l'expression "compris(e) entre... et..." qui vient d'être citée et qui est utilisée dans la présente demande doit être comprise comme définissant non seulement les valeurs de l'intervalle, mais également les valeurs des bornes de cet intervalle.

On observe, en effet, que la mise en oeuvre de tels intervalles avantageux et préférés pour le diamètre de mailles du tamis permet d'améliorer encore l'homogénéité de la composition mélangée obtenue à l'issue de l'étape (b) de mélangeage et, par conséquent, les propriétés de la plaque bipolaire composite telle qu'obtenue à l'issue du procédé de fabrication selon l'invention, comme on le verra ci-après.

Dans un mode de mise en oeuvre particulier du procédé selon l'invention, l'étape (b) de mélangeage à sec de la composition tamisée est réalisée au moyen d'un mélangeur à poudre convectif du type Turbula®.

L'homogénéité de la composition obtenue à l'issue de cette étape (b) de mélangeage à sec augmente avec la durée de cette étape (b).

Les étapes (a) de tamisage à sec et (b) de mélangeage à sec de la composition comprenant le graphite lamellaire et le polymère thermoplastique permettent d'obtenir une composition se présentant sous la forme d'un mélange homogène des différentes poudres formant la composition, bien que les poudres de graphite lamellaire et de polymère thermoplastique diffèrent généralement par leurs granulométries, leurs densités et leurs formes de particules. Ces étapes (a) et (b) permettent d'obtenir un mélange homogène et ce, même dans le cas où le polymère thermoplastique est électrostatique.

A l'issue de l'étape (b) de mélangeage à sec des poudres de graphite lamellaire et de polymère thermoplastique, on procède à l'étape (c) de dépôt de la composition telle qu'obtenue, désignée dans la suite de la présente demande par l'expression "composition mélangée", dans un moule dans lequel est ensuite réalisée l'étape (d) de moulage par thermocompression.

Ce moule comprend une empreinte qui détermine la forme finale de la plaque bipolaire composite. Ainsi, la plaque bipolaire composite telle qu'obtenue à l'issue du procédé de fabrication selon l'invention peut comprendre, sur chacune de ses faces, les réseaux de canaux de distribution, de circulation et d'évacuation des différents fluides impliqués dans une pile à combustible, notamment les réseaux qui se présentent classiquement sous la forme de serpentins, sans qu'il soit nécessaire de procéder à une étape complémentaire d'usinage. Toutefois, rien n'interdit un tel usinage ultérieur.

De manière classique, le moule est constitué d'une matrice, ou partie femelle, dans laquelle est déposée la composition mélangée, et d'un poinçon, ou partie mâle, qui permet de fermer le moule.

Dans un mode de réalisation avantageux du procédé selon l'invention, ce moule est chauffé préalablement à la mise en oeuvre de l'étape (c) de dépôt de la composition mélangée dans ledit moule. De manière plus particulièrement avantageuse, le moule est préchauffé au moyen d'un chauffage par induction pour écourter le temps nécessaire au chauffage de ce moule.

L'étape (c) de dépôt de la composition mélangée peut être effectuée par un déversement manuel de cette dernière dans l'empreinte du moule mais également par un déversement automatique. A titre d'exemple de mise en oeuvre, on peut procéder au prélèvement de la quantité de composition mélangée à déposer au moyen d'un doseur automatique puis au dépôt de cette quantité au moyen d'un système vibrant se déplaçant au-dessus de l'empreinte du moule. Le dépôt de la composition mélangée dans l'empreinte du moule peut également être opéré en une ou plusieurs passes.

Quelles que soient les modalités de déversement retenues, il est recommandé que cette étape (c) conduise à une répartition régulière de la composition mélangée dans l'empreinte du moule.

Après fermeture du moule, on procède à l'étape (d) de moulage par thermocompression au moyen d'un chauffage par induction du moule. Cette étape (d) peut notamment être réalisée au moyen de la technologie désignée sous la terminologie "3iTech®" et développée par la société Roctool.

Cette étape (d) de moulage par thermocompression est avantageusement réalisée par l'application d'une pression comprise entre $5.10^7$ Pa et $15.10^7$ Pa, le moule étant par ailleurs, de préférence, chauffé à une température supérieure à la température de fusion du polymère thermoplastique présent dans la composition mélangée.

De préférence, lors de cette étape (d), la pression appliquée est comprise entre $7.10^7$ Pa et $10.10^7$ Pa.

Comme précédemment indiqué, la composition comprend au moins un graphite lamellaire et au moins un polymère thermoplastique. Elle peut donc n'être constituée que d'un seul graphite lamellaire et d'un seul polymère thermoplastique. Elle peut également comprendre un ou plusieurs graphites lamellaires et/ou un ou plusieurs polymères thermoplastiques.

Dans une variante de l'invention, le pourcentage massique du (ou des) graphite(s) lamellaire(s) représente le pourcentage massique majoritaire de la composition à partir de laquelle est fabriquée la plaque bipolaire composite.

Dans une variante particulière, la composition comprend, les pourcentages massiques étant rapportés à la masse totale de la composition :

- au moins 70% dudit au moins un graphite lamellaire, et
- au moins 10% dudit au moins un polymère thermoplastique.

Dans ce qui précède et dans ce qui suit, on entend, par "*graphite lamellaire*", un graphite se présentant sous la forme de lamelles individualisées et non pas sous la forme d'agglomérats de lamelles, telle que présentée par les plaquettes de graphite $G_{LP}$ du document **[1]**.

Il est précisé que les expressions telles que *"graphite en lamelles"*, "*lamelles de graphite*" et "*plaquettes de graphite*" sont à considérer comme synonymes de celle de *"graphite lamellaire"*.

Le graphite lamellaire peut être un graphite lamellaire synthétique, c'est-à-dire un graphite lamellaire qui est obtenu par synthèse, ou bien être un graphite lamellaire naturel.

Un graphite lamellaire synthétique étant toutefois un graphite de grande pureté, il sera, de ce fait, préféré à un graphite lamellaire naturel.

Le graphite tel que décrit et noté G1 dans le document **[1]** peut notamment être utilisé comme graphite lamellaire au sens de la présente invention.

Les plaquettes élémentaires de graphite expansé qui, sous une forme agglomérée constituent les plaquettes de graphite $G_{LP}$ du document **[1]**, peuvent également être utilisées en tant que telles, c'est-à-dire sous forme individualisée, comme graphite lamellaire au sens de la présente invention.

Selon un mode de réalisation particulier de l'invention, chaque graphite lamellaire se présente sous la forme de particules dont au moins 90% en nombre ont une taille moyenne de particules $d_{90}$ comprise entre de 1 $\mu$m à 300 $\mu$m, avantageusement entre 5 $\mu$m et 200 $\mu$m et, de préférence, entre 10 $\mu$m et 180 $\mu$m.

On peut, en particulier, mettre en oeuvre les graphites lamellaires synthétiques désignés par l'appellation de *"graphites synthétiques primaires"* et commercialisés par la société Timcal sous la dénomination commerciale Timrex®KS Graphite. Comme on le verra dans les exemples ci-après, les graphites lamellaires synthétiques portant les références commerciales Timrex®KS75 et Timrex®KS150 ont été utilisés.

Selon un mode de réalisation particulier de l'invention, le pourcentage massique en graphite(s) lamellaire(s) est compris entre 75% et 90%, avantageusement entre 80% et 88% et, de préférence, entre 82% et 86%, par rapport à la masse totale de la composition.

La composition comprend, en outre, au moins un polymère thermoplastique.

Dans une version particulièrement avantageuse de l'invention, chaque graphite lamellaire et chaque polymère thermoplastique se présentent sous la forme de particules dont les tailles moyennes de particules $d_{90}$ sont du même ordre de grandeur. Il est précisé qu'il faut bien entendu comprendre que les particules de graphite lamellaire correspondent aux lamelles de ce graphite. Ainsi, chaque graphite lamellaire et chaque polymère thermoplastique se présentent sous la forme de particules dont au moins 90% en nombre ont une taille moyenne de particules $d_{90}$ comprise dans le même intervalle, de préférence comprise entre 1 $\mu$m et 300 $\mu$m.

Dans une telle version préférentielle de l'invention, et notamment à l'issue de l'étape (b) de mélangeage de la composition à sec, on est en présence d'une composition mélangée particulièrement homogène formée par les particules de chacun des graphites lamellaires et polymères thermoplastiques. Cette homogénéité particulière de la composition mélangée a une incidence directe sur les propriétés de la plaque bipolaire composite telle qu'obtenue à l'issue de l'étape (e) du procédé selon l'invention.

En effet, plus l'homogénéité de la composition mélangée est élevée, plus la plaque bipolaire composite obtenue par le procédé selon l'invention présente un taux de porosité particulièrement faible et, partant, une conductivité thermique ainsi qu'une tenue au test d'étanchéité aux gaz nettement améliorées. En outre, la plaque bipolaire composite, dont l'aspect visuel est tout à fait satisfaisant, présente une surface particulièrement lisse et régulière qui reproduit exactement l'empreinte laissée par le moule et ne nécessite pas d'étape d'usinage complémentaire.

Une telle homogénéité ne peut en aucun cas être atteinte par le procédé de fabrication décrit dans le document **[1]** qui met en oeuvre une poudre micro-composite formée de particules de graphite(s) partiellement recouvertes de particules de fluoropolymère qui présentent une taille très inférieure à celle desdites particules de graphite(s).

Selon un mode de réalisation particulier de l'invention, chaque polymère thermoplastique se présente sous la forme de particules dont au moins 90% en nombre ont une taille moyenne de particules $d_{90}$ comprise entre 1 $\mu$m et 200 $\mu$m, avantageusement entre 2 $\mu$m et 100 $\mu$m et, de préférence, entre 3 $\mu$m et 50 $\mu$m.

Selon un mode de réalisation particulier de l'invention, chaque polymère thermoplastique est avantageusement choisi parmi une polyoléfine, un fluoropolymère et un poly(sulfure de phénylène) (PPS).

De préférence, ce polymère thermoplastique est un fluoropolymère.

Ce fluoropolymère peut être un homopolymère de fluorure de vinylidène (VDF, également noté VF2), c'est-à-dire un polyfluorure de vinylidène (PVDF).

Ce fluoropolymère peut également être un copolymère de fluorure de vinylidène (VDF) et d'au moins un autre comonomère fluoré copolymérisable avec le VDF. Cet au moins un autre comonomère fluoré peut, par exemple, être choisi parmi les comonomères fluorés cités dans le document **[1]**, aux lignes 40 à 58 de la colonne 7. Cet autre comonomère peut notamment être choisi parmi :

- le fluorure de vinyle,
- le trifluoroéthylène (TFE ou VF3),
- le chlorotrifluoroéthylène (CTFE),
- le 1,2-difluoroéthylène,
- l'hexafluoropropylène (HFP), et
- les perfluoro(alkylvinyl) éthers.

Dans une variante avantageuse de l'invention, le fluoropolymère est un polyfluorure de vinylidène (PVDF) ou un poly(fluorure de vinylidène-hexafluoropropylène) (PVDF-HFP).

Selon un mode de réalisation particulier de l'invention, le pourcentage massique en polymère(s) thermoplastique(s) est compris entre 11% et 25%, avantageusement entre 12% et 20% et, de préférence, entre 14% et 18%, par rapport à la masse totale de la composition.

Selon un mode de réalisation de l'invention, la composition comprend, en outre, au moins un additif.

Dans une version avantageuse du procédé selon l'invention, cet additif est un additif électriquement conducteur et, de préférence, un additif électriquement conducteur non métallique. En effet, lorsque cet additif est non métallique, il présente l'avantage de conférer, à la plaque bipolaire composite fabriquée à partir d'une composition le comprenant, une résistance à la corrosion accrue dans les conditions d'utilisation des piles à combustibles du type PEMFC, à savoir une température de fonctionnement de l'ordre de 80°C, dans un environnement oxydant, en présence d'eau légèrement acide.

Dans une version préférée du procédé selon l'invention, l'additif électriquement conducteur est choisi parmi un graphite expansé, un graphite sous forme de lamelles ou de plaquettes, du noir de carbone, du charbon actif, des fibres de carbone, des nanotubes de carbone et leurs mélanges, sous réserve que le graphite sous forme de lamelles ou de plaquettes ait des dimensions autres que celles du graphite lamellaire spécifique de la composition mise en oeuvre dans le procédé selon l'invention.

Les plaquettes de graphite, telles que décrites et notées $G_{LP}$ dans le document **[1]**, peuvent notamment être utilisées comme additif électriquement conducteur.

Plus préférentiellement, l'additif électriquement conducteur est un graphite expansé. Dans les exemples ci-après, le graphite expansé disponible auprès de la société Timcal et portant la référence commerciale Timrex®BNB90 a été utilisé.

Selon un mode de réalisation de l'invention, le pourcentage massique en additif(s) peut représenter jusqu'à 10% de la masse totale de la composition.

Selon un mode particulier de réalisation de l'invention, ce pourcentage massique en additif(s) est avantageusement compris entre 2% et 5% et, de préférence, entre 3% et 4%, par rapport à la masse totale de la composition.

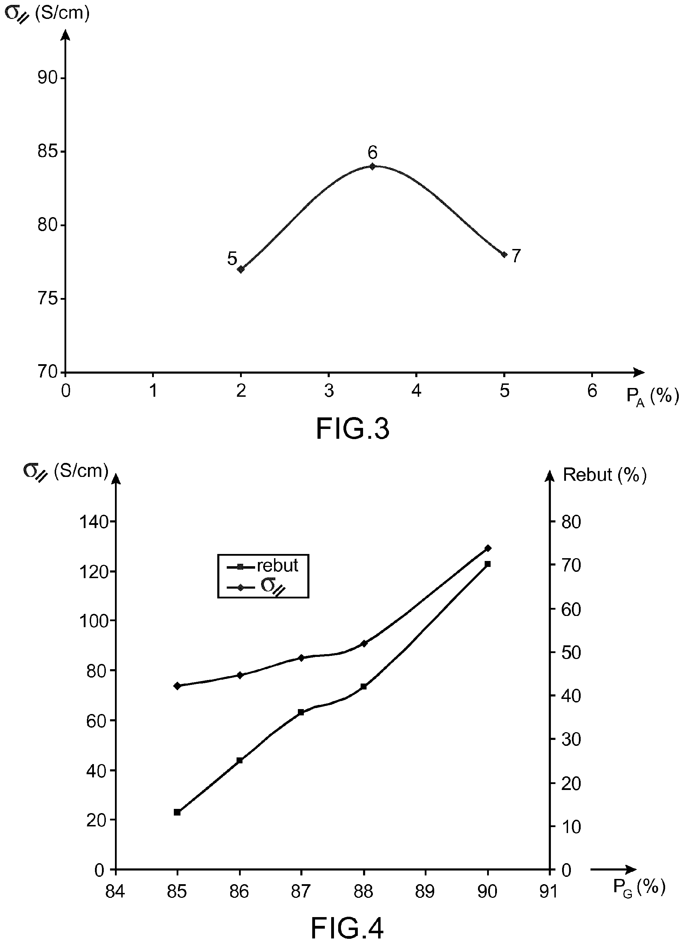

Les exemples de réalisation décrits ci-après, en relation avec la figure 3, mettent en évidence, de manière inattendue et surprenante, qu'une composition comprenant, en plus du polymère thermoplastique et du graphite lamellaire, un pourcentage massique en graphite expansé compris entre 3% et 4%, confère une conductivité électrique planaire remarquable.

L'invention se rapporte, en deuxième lieu, à une plaque bipolaire composite.

Selon l'invention, cette plaque bipolaire composite est fabriquée par la mise en oeuvre du procédé qui vient d'être défini ci-dessus.

Plus particulièrement, cette plaque bipolaire composite est fabriquée à partir d'une composition comprenant au moins un graphite lamellaire et au moins un polymère thermoplastique par le procédé comprenant les étapes successives suivantes :

(a) le tamisage à sec de la composition au moyen d'un tamis dont le diamètre de mailles est inférieur ou égal à 1000 μm,
(b) le mélangeage à sec de la composition tamisée,
(c) le dépôt de la composition mélangée dans un moule, ce moule étant de préférence préchauffé,
(d) le moulage par thermocompression de la composition mélangée avec chauffage par induction du moule, et
(e) le démoulage de la composition thermocomprimée conduisant à l'obtention de la plaque bipolaire composite.

Pour les caractéristiques avantageuses du procédé permettant de fabriquer ladite plaque bipolaire composite, on se réfèrera à ce qui a été défini précédemment.

L'invention se rapporte, en troisième lieu, à l'utilisation d'une plaque bipolaire composite telle que définie ci-dessus.

Selon l'invention, cette plaque bipolaire composite peut être avantageusement utilisée dans une pile à combustible.

Cette pile à combustible peut, en particulier, être une pile à combustible à membrane électrolyte polymère (PEMFC) et, notamment, une pile à combustible à méthanol direct (DMFC).

L'invention se rapporte, en quatrième lieu, à une pile à combustible comprenant au moins une plaque bipolaire composite telle que définie ci-dessus.

Selon l'invention, cette pile à combustible peut, en particulier, être une pile à combustible à membrane électrolyte polymère (PEMFC) et, notamment, une pile à combustible à méthanol direct (DMFC).

D'autres caractéristiques et avantages de l'invention apparaîtront mieux à la lecture du complément de description qui suit, qui se rapporte à des modes particuliers de réalisation de l'invention.

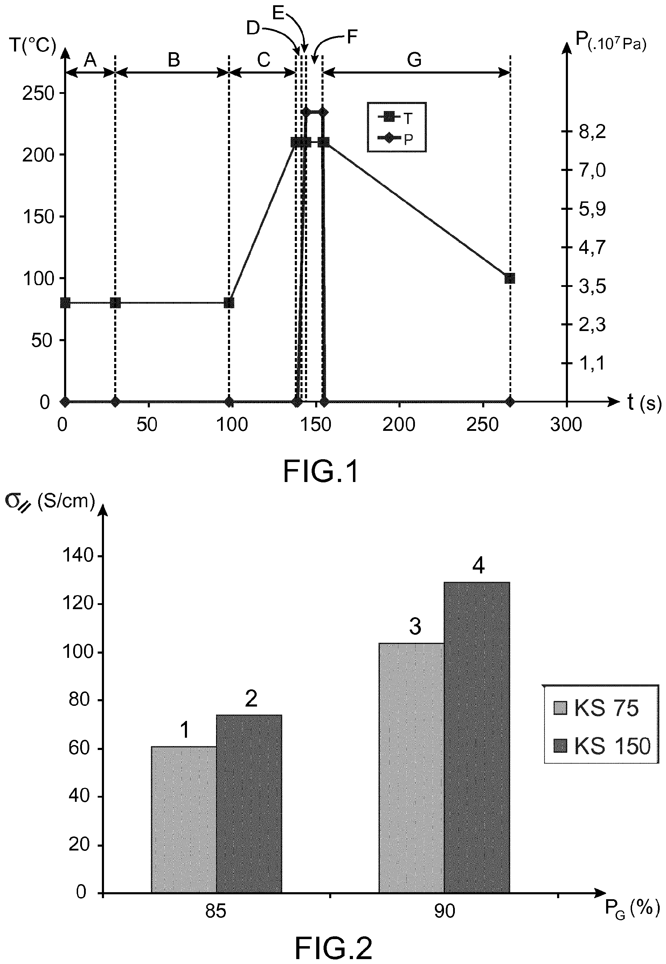

Il est précisé que ce complément de description, qui se réfère notamment aux figures 1 à 4 telles qu'annexées, n'est donné à titre d'illustration de l'objet de l'invention et ne constitue en aucun cas une limitation de cet objet.

En particulier, le procédé de fabrication d'une plaque bipolaire composite qui est détaillé ci-après est bien entendu transposable à la fabrication d'une plaque bipolaire composite qui serait obtenue à partir d'une composition comprenant au moins un graphite lamellaire tel que défini ci-dessus et au moins un polymère thermodurcissable, à la place d'un polymère thermoplastique.

## BRÈVE DESCRIPTION DES DESSINS

La figure 1 illustre les courbes traduisant l'évolution de la température (notée T et exprimée en °C) ainsi que de la pression (notée P et exprimée en Pa) en fonction du temps (noté t et exprimé en s), au cours des phases A à G du cycle de fabrication d'une plaque bipolaire composite à partir de la composition 6, préalablement soumise à un tamisage à sec puis à un mélangeage à sec.

La figure 2 représente l'évolution de la conductivité électrique planaire (notée $\sigma_{//}$ et exprimée en S/cm) des plaques bipolaires fabriquées à partir des compositions 1 à 4, en fonction du pourcentage massique en graphite lamellaire (noté $P_G$ et exprimé en %) présent dans lesdites compositions 1 à 4.

La figure 3 représente l'évolution de la conductivité électrique planaire (notée $\sigma_{//}$ et exprimée en S/cm) des plaques bipolaires fabriquées à partir des compositions 5 à 7, en fonction du pourcentage massique en additif (noté $P_A$ et exprimé en %) présent dans lesdites compositions 5 à 7.

La figure 4 représente l'évolution de la conductivité électrique planaire (notée $\sigma_{//}$ et exprimée en S/cm) et du taux de rebut au test d'étanchéité aux gaz (noté Rebut et exprimé en %) des plaques bipolaires composites fabriquées à partir des compositions 8 à 12, en fonction du pourcentage massique en graphite lamellaire (noté $P_G$ et exprimé en %) présent dans lesdites compositions 8 à 12.

## EXPOSÉ DÉTAILLÉ DE MODES DE RÉALISATION PARTICULIERS

### -I- Composés utilisés

Dans le cadre du présent exemple, les composés suivants ont été utilisés :

- les graphites lamellaires sont des graphites lamellaires synthétiques, dits "*graphites synthétiques primaires*", commercialisés par la société Timcal sous les références Timrex®KS 75 et Timrex®KS 150, dont au moins 90% des particules en nombre présentent une taille moyenne de particules, notée $d_{90}$, de 55,8 $\mu$m pour le Timrex®KS 75 (noté KS 75 ci-après) et de 180 $\mu$m pour le Timrex®KS 150 (noté KS 150 ci-après),
- l'additif est un graphite expansé, commercialisé par la société Timcal sous la référence Timrex®BNB90 (noté BNB90 ci-après), qui présente une taille moyenne de particules $d_{90}$ de 85 $\mu$m, et
- le polymère thermoplastique est un polyfluorure de vinylidène, commercialisé par la société Arkema sous la référence Kynar®301-F (noté PVDF ci-après), qui est caractérisé par une viscosité à l'état fondu comprise entre 28,0 kP et 34,0 kP à une température de 232°C et sous un taux de cisaillement de 100/s (mesurée selon la norme ASTM D3835), par un indice de fluidité à chaud compris entre 2,0 g/10 min et 6,0 g/10 min à une température de 232°C et sous une charge de 21,6 kg (mesurée selon la norme ASTM D1238) ainsi que par un point de fusion compris entre 155°C et 165°C, ce polymère se présentant, en outre, sous la forme d'une poudre dont la taille de particule $d_{90}$ est d'environ 5,0 $\mu$m.

### -II- Préparation des compositions puis des compositions mélangées

Les compositions 1 à 12 ont été préparées à partir des composés décrits au chapitre -I-, dans les proportions massiques indiquées dans les tableaux 1 et 2 ci-dessous :

Tableau 1

| Composition | 1 | 2 | 3 | 4 | 5 | 6 | 7 |
|---|---|---|---|---|---|---|---|
| PVDF (en %) | 15 | 15 | 10 | 10 | 14 | 14 | 14 |
| KS 75 (en %) | 85 | - | 90 | - | - | - | - |
| KS 150 (en %) | - | 85 | - | 90 | 84 | 82,5 | 81 |
| BNB90 (en %) | - | - | - | - | 2 | 3,5 | 5 |

Tableau 2

| Composition | 8 | 9 | 10 | 11 | 12 |
|---|---|---|---|---|---|
| PVDF (en %) | 15 | 14 | 13 | 12 | 10 |
| KS 150 (en %) | 80 | 81 | 82 | 83 | 85 |
| BNB90 (en %) | 5 | 5 | 5 | 5 | 5 |

Les compositions mélangées obtenues à partir des compositions 1 à 12 détaillées dans les tableaux 1 et 2 ci-dessus ont été préparées selon un même protocole qui est décrit ci-après, en référence à la préparation de la composition mélangée 6.

Pour la réalisation de 10 kg de la composition mélangée 6, on a pesé les quantités suivantes de composés :

- 8250 g ($\pm$ 0,5 g) de KS 150,
- 350 g ($\pm$ 0,5 g) de BNB90, et
- 1450 g ($\pm$ 0,5 g) de PVDF.

Après un pré-mélange manuel d'une durée d'1 min des quantités mentionnées ci-dessus, on a procédé au tamisage à sec de la composition 6 au moyen d'une tamiseuse automatique Ro-Tap® RX 29-10 disponible auprès de la société Tyler. Cette tamiseuse automatique est équipée d'un tamis présentant un diamètre de mailles de 300 $\mu$m ainsi que d'un dispositif de décolmatage. Cette étape de tamisage à sec a duré 45 min.

Après l'étape de tamisage à sec, on a procédé à un mélangeage à sec de la composition tamisée 6 au moyen d'un mélangeur Turbula®T50 A disponible auprès de la société Wab, l'étape de mélangeage à sec étant conduite sous une vitesse de rotation de 40 tr/min, pendant une durée de 20 min. Il est précisé que cette durée de 20 min permet de conférer une dispersion optimale des trois composés dans la composition mélangée 6 correspondante ainsi obtenue, notamment par rapport à une durée inférieure qui serait de 10 min pour une même quantité de composition mélangée obtenue (en l'espèce, 10 kg).

A l'issue de cette étape de mélangeage à sec, on a obtenu une composition mélangée 6 se présentant sous la forme d'un mélange sec homogène, cette homogénéité étant observable à l'échelle submillimétrique telle que définie ci-dessus.

-III- Fabrication de plaques bipolaires composites à partir des compositions

Les plaques bipolaires composites réalisées à partir des compositions 1 à 5 et 7 à 12 ont été fabriquées selon un cycle de fabrication identique à celui qui est décrit ci-après pour la fabrication d'une plaque bipolaire composite à partir de la composition 6.

Les différentes phases A à G du cycle de fabrication sont décrites en détail ci-après, en référence à la figure 1. La figure 1 illustre, par ailleurs, l'évolution de la température et de la pression appliquées en fonction du temps.

La composition mélangée 6, telle qu'obtenue à l'issue des étapes de tamisage à sec puis de mélangeage à sec, est déposée dans l'empreinte d'un moule préalablement porté à une température de 80°C au moyen d'un chauffage par induction. Cette phase de dépôt correspond à la phase A représentée à la figure 1.

Lors du cycle de fabrication décrit ici, le dépôt d'une quantité préalablement pesée de la composition mélangée 6 dans le moule a été effectué manuellement.

Lors de la phase B, on procède à l'étalement de la composition mélangée 6 de manière à obtenir une répartition régulière de cette dernière dans la cavité du moule.

Le moule est ensuite fermé et porté, en 40 s, à une température de 210°C, soit à une température de 55°C supérieure à la température de fusion du PVDF. Cette montée en température du moule, qui correspond à la phase C de la figure 1, est réalisée le plus rapidement possible au regard de la configuration des inducteurs, de la forme de la plaque bipolaire composite à fabriquer et de la puissance des générateurs.

Il est précisé que la température appliquée au moule doit rester compatible avec la température maximale admissible qui peut être imposée par un traitement de surface, tel qu'un traitement anti-adhérent, pratiqué au niveau de l'empreinte du moule. Dans le cas du moule utilisé lors du présent cycle de fabrication, la température maximale admissible est de 220°C.

Lors de la phase D, qui suit la phase C, on réalise un palier isotherme d'une durée d'1s à 210°C avant l'application d'une pression au moule ainsi qu'à la composition 6 qu'il contient, qui correspond à la phase E.

Lors de la phase E, on procède à une montée progressive de la pression appliquée jusqu'à une valeur de pression appliquée nominale de $9,4.10^7$ Pa, la température étant toujours maintenue à 210°C. Cette montée progressive est réalisée en 5 s, par augmentation de la pression appliquée à un rythme de 300 kN/s.

Lors de la phase F, qui suit la phase E, on réalise un palier isotherme et isobare d'une durée de 10 s à 210°C et sous la valeur de pression nominale de $9,4.10^7$ Pa.

A l'issue de la phase F, qui se situe à un temps de 150 s après le début de la phase A de dépôt de la composition mélangée 6 dans la cavité du moule, la pression appliquée est relâchée et la température du moule abaissée jusqu'à une valeur de 100°C, température à laquelle la plaque bipolaire composite obtenue à partir de la composition mélangée 6 est extraite du moule, par exemple par éjection. Cette phase G, qui débute avec le relâchement de la pression appliquée et se termine avec l'extraction de la plaque bipolaire composite, correspond à l'étape de refroidissement du moule et a une durée d'environ 110 s.

Il y a lieu de noter que, pour les plaques bipolaires composites fabriquées à partir des compositions 1 à 12, il est nécessaire d'abaisser la température du moule jusqu'à atteindre une valeur de 100°C, au plus, pour permettre une extraction des plaques bipolaires composites sans déformation de ces dernières, en particulier lorsque l'on procède à cette extraction par éjection.

On observe que le cycle de fabrication, constitué par les phases successives A à G, est réalisé en une durée inférieure à 5 min, étant précisé que le temps global du procédé de fabrication prenant en compte les étapes de pré-mélange, de tamisage à sec et de mélangeage à sec de la composition s'établit à moins de 75 min.

-IV- Evaluation de la conductivité électrique planaire

L'évaluation de la conductivité électrique planaire a été réalisée par la méthode des 4 pointes en appliquant le modèle semi-infini, l'épaisseur étant considérée infinie par rapport à l'écartement des pointes. La conductivité électrique planaire, notée $\sigma_{//}$ et exprimée en S/cm, se déduit de la formule suivante :

$$\sigma_{//} = \frac{I}{2\pi sU}$$

dans laquelle

I est l'intensité
s est l'écartement entre les pointes, et
U est la tension.

Pour l'évaluation de cette conductivité électrique planaire, des plaques bipolaires composites ont été fabriquées, selon le cycle de fabrication décrit précédemment au chapitre -III-, à partir des compositions 1 à 7 préparées conformément au protocole décrit au chapitre -II- ci-dessus.

La figure 2 illustre l'évolution de la conductivité électrique planaire, notée $\sigma_{//}$, des plaques bipolaires composites fabriquées à partir des compositions 1 à 4, en fonction du pourcentage massique en graphite lamellaire présent dans lesdites compositions 1 à 4.

En plus de confirmer l'augmentation attendue de la conductivité électrique planaire des plaques bipolaires composites avec le pourcentage massique en graphite lamellaire, les diagrammes en bâtons de la figure 2 montrent que, pour un même pourcentage massique en graphite lamellaire, on obtient une meilleure conductivité électrique planaire pour les plaques bipolaires composites fabriquées à partir des compositions 2 et 4 comprenant le graphite lamellaire Timrex®KS 150 que pour les plaques bipolaires composites fabriquées à partir des compositions 1 et 3 qui comprennent le graphite lamellaire Timrex®KS 75.

La figure 3 illustre l'évolution de la conductivité électrique planaire $\sigma_{//}$ des plaques bipolaires composites fabriquées à partir des compositions 5 à 7, en fonction du pourcentage massique en graphite expansé présent dans lesdites compositions 5 à 7. Il est précisé que ces compositions 5 à 7 comprennent toutes un pourcentage massique total de 86% d'un mélange de graphite lamellaire (Timrex®KS 150) et de graphite expansé (Timrex®BNB90), avec des pourcentages respectifs en graphite lamellaire et en graphite expansé variables, comme indiqué dans le tableau 1 ci-dessus.

L'observation de la courbe de la figure 3 fait apparaître des valeurs de conductivité électrique planaire pour les plaques bipolaires composites fabriquées à partir des compositions 5 à 7 qui s'échelonnent entre 77 S/cm et 84 S/cm, de telles valeurs étant supérieures à la valeur de 74 S/cm qui est obtenue pour la conductivité électrique planaire de la plaque bipolaire composite fabriquée à partir de la composition 2 qui ne comprend que du graphite lamellaire Timrex®KS 150, dans un pourcentage massique comparable de 85%.

Cette comparaison met en évidence le fait que la substitution de graphite expansé au graphite lamellaire, même en un pourcentage massique réduit, et notamment compris entre 2% et 5% par rapport à la masse totale de la composition, permet d'optimiser les propriétés de conductivité électrique planaire. En effet, la présence de graphite expansé favorise la formation de ponts conducteurs de l'électricité au sein des plaques bipolaires composites fabriquées à partir de compositions comprenant un tel additif.

La figure 3 montre, par ailleurs, que la valeur maximale de conductivité électrique planaire est atteinte pour un pourcentage massique de 3,5% en graphite expansé. En d'autres termes, une substitution de l'ordre de 3,5% en masse du graphite lamellaire par du graphite expansé permet de fabriquer une plaque bipolaire composite présentant des propriétés de conductivité électrique, en particulier de conductivité électrique planaire, optimisées.

-V- Evaluation de la conductivité électrique planaire et des propriétés d'étanchéité

L'évaluation de la conductivité électrique planaire a été réalisée selon la méthode précisée au Chapitre -IV- ci-dessus.

Les propriétés d'étanchéité aux gaz ont été évaluées au moyen d'une cellule étanche dans laquelle a été insérée chaque plaque, de manière à définir deux chambres, une chambre amont et une chambre aval. A l'aide d'un manomètre, on applique une pression de $10^5$ Pa de diazote $N_2$ dans la chambre amont puis on suit l'évolution, en fonction du temps, de la différence de pressions respectives des chambres amont et aval. On considère qu'une plaque est étanche, c'est-à-dire qu'elle ne présente pas de réseau de porosités ouvertes, lorsque cette différence de pressions respectives des chambres amont et aval est inférieure ou égale à $10^3$ Pa. Au-delà de cette valeur seuil, la plaque est mise au rebut. On détermine ainsi un taux de rebut qui correspond au nombre de plaques non étanches par rapport au nombre total de plaques testées, étant précisé que, pour chaque composition 8 à 12, un nombre total de 20 plaques a été soumis au présent test d'étanchéité.

Pour l'évaluation de la conductivité électrique planaire ainsi que des propriétés d'étanchéité aux gaz, des plaques bipolaires composites ont été fabriquées, selon le cycle de fabrication décrit précédemment au chapitre -III-, à partir des compositions 8 à 12, préparées conformément au protocole décrit au chapitre -II- ci-dessus.

La figure 4 illustre l'évolution de la conductivité électrique planaire, notée $\sigma_{//}$, ainsi que le taux de rebut au test d'étanchéité aux gaz, noté Rebut, des plaques bipolaires composites fabriquées à partir des compositions 8 à 12, en fonction du pourcentage massique en graphite lamellaire présent dans lesdites compositions 8 à 12.

Comme déjà observé ci-dessus pour la figure 2, la figure 4 montre que la conductivité électrique planaire des plaques bipolaires composites augmente graduellement avec le pourcentage massique en graphite lamellaire. Par contre, on observe que le taux de rebut au test d'étanchéité aux gaz augmente également graduellement en fonction de ce même pourcentage massique en graphite lamellaire. En d'autres termes, si l'augmentation du pourcentage massique en graphite lamellaire et en graphite expansé permet d'améliorer la conductivité électrique planaire, cette augmentation se fait au détriment des propriétés d'étanchéité aux gaz de la plaque bipolaire composite.

Il apparaît donc nécessaire de limiter le pourcentage massique en graphite lamellaire et, le cas échéant, en additif(s) électriquement conducteur(s) comme le graphite expansé, pour répondre à l'ensemble des spécifications des cahiers des charges, notamment à celles imposées pour la conductivité électrique planaire et pour le taux de rebut au test d'étanchéité aux gaz pour lequel une valeur maximale de 5% est classiquement retenue.

Les inventeurs ont ainsi pu mettre en évidence, qu'à partir des composés listés au chapitre -I-, une composition comprenant des pourcentages massiques de 14% en PVDF et de 86% en graphite lamellaire Timrex®KS150 seul, ou dont un pourcentage massique allant jusqu'à 10% pouvait être substituée par du graphite expansé Timrex®BNB90, permet de fabriquer des plaques bipolaires composites qui satisfont simultanément les spécifications de conductibilité électrique planaire et de taux de rebut au test d'étanchéité aux gaz classiquement fixées par les cahiers des charges.

-VI- Optimisation des paramètres du cycle de fabrication

Des tests ont été conduits pour déterminer quels paramètres du cycle de fabrication permettent d'optimiser la conductivité électrique planaire et le taux de rebut au test d'étanchéité aux gaz d'une composition conforme à l'invention.

Les paramètres (a) à (g) évalués lors de ces tests sont les suivants :

(a) la température de préchauffe du moule telle qu'établie avant le démarrage du cycle de fabrication et le dépôt de la composition dans l'empreinte du moule,
(b) la température de démoulage qui correspond à la température atteinte par le moule lors de l'extraction de la plaque bipolaire composite et qui correspond au terme de la phase G,
(c) la température du palier isotherme de la phase D,
(d) la durée de ce palier isotherme de la phase D,
(e) le rythme de l'augmentation de la pression appliquée lors de la phase E,
(f) la durée du palier isotherme et isobare de la phase F, et
(g) la pression nominale appliquée au terme de la phase E et lors de la phase F.

Ces évaluations ont mis en évidence le fait que les paramètres de température de préchauffe conduite à 80°C et à 100°C (a), de température de démoulage conduit à 80°C et à 100°C (b) ainsi que de rythme de l'augmentation de la pression appliquée (e) n'ont pas de réelle influence, que ce soit sur les valeurs de conductivité électrique planaire ou sur les valeurs des taux de rebut au test d'étanchéité aux gaz des plaques bipolaires composites fabriquées à partir de la composition 6.

Au contraire, comme le montrent les résultats reportés dans le tableau 3 ci-dessous, les paramètres que sont la température du palier isotherme de la phase D (c), la durée de ce palier isotherme de la phase D (d), la durée du palier isotherme et isobare de la phase F (f) ainsi que la pression nominale appliquée au terme de la phase E et lors de la phase F (g) ont un impact sur ces valeurs de conductivité électrique planaire (notée $\sigma_{//}$) et de taux de rebut au test d'étanchéité aux gaz.

Tableau 3

| Paramètre (c) | Paramètre (d) | Paramètre (f) | Paramètre (g) | σ// (S/cm) | Rebut (%) |
|---|---|---|---|---|---|
| Température du palier isotherme phase D (°C) | Durée du palier isotherme phase D (s) | Durée du palier isobare et isotherme phase F (s) | Pression nominale appliquée phase F (Pa) | | |
| 210 | 30 | 60 | $9.10^7$ | 95 | 10 |
| 190 | 30 | 60 | $9.10^7$ | 73 | 0 |
| 210 | 10 | 60 | $9.10^7$ | 85 | 0 |
| 190 | 10 | 60 | $9.10^7$ | 87 | 0 |
| 210 | 30 | 10 | $9.10^7$ | 88 | 40 |
| 190 | 30 | 10 | $9.10^7$ | 83 | 0 |
| 210 | 10 | 10 | $9.10^7$ | 97 | 0 |
| 190 | 10 | 10 | $9.10^7$ | 82 | 0 |
| 210 | 30 | 60 | $7{,}5.10^7$ | 89 | 10 |
| 190 | 30 | 60 | $7{,}5.10^7$ | 80 | 40 |
| 210 | 10 | 60 | $7{,}5.10^7$ | 93 | 0 |
| 190 | 10 | 60 | $7{,}5.10^7$ | 86 | 0 |
| 210 | 30 | 10 | $7{,}5.10^7$ | 100 | 0 |
| 190 | 30 | 10 | $7{,}5.10^7$ | 80 | 30 |
| 210 | 10 | 10 | $7{,}5.10^7$ | 97 | 30 |
| 190 | 10 | 10 | $7{,}5.10^7$ | 80 | 30 |

Le tableau 3 montre que la conductivité électrique planaire des plaques bipolaires composites fabriquées à partir de la composition 6 est, de manière quasi systématique, plus élevée lorsque la température du palier isotherme mis en oeuvre lors de la phase D (c) est de 210°C plutôt que de 190°C, soit lorsque cette température est elle-même élevée.

Les autres paramètres (d), (f) et (g) ont, quant à eux, un impact moins marqué sur les valeurs de conductivité électrique planaire. Toutefois, le tableau 3 montre, que, pour que le taux de rébus au test de perméabilité aux gaz soit le plus faible, ces paramètres sont, par ordre d'importance décroissante :

- une pression nominale appliquée (g) lors de la phase F de $9.10^7$ Pa plutôt que de $7{,}5.10^7$ Pa, soit plus élevée,
- une durée de palier isotherme (d) lors de la phase D, de 10 s plutôt que de 30 s, soit plus courte, et
- une durée de palier isotherme et isobare (f) lors de la phase F, de 60 s plutôt que de 10 s, soit plus longue.

Pour tenir compte des spécifications des cahiers des charges ainsi que des contraintes de productivité les plus exigeantes, avec la composition 6, les conditions opératoires optimales sont :

- une température du palier isotherme (c) lors de la phase D de 210°C,
- une pression nominale appliquée (g) lors de la phase F de $9.10^7$ Pa,
- une durée de palier isotherme (d) lors de la phase D, de 10 s, et
- une durée de palier isotherme et isobare (f) lors de la phase F, de 10 s.

**BIBLIOGRAPHIE**

**[1]** US 7,494,740

**Revendications**

1. Procédé de fabrication d'une plaque bipolaire composite à partir d'une composition comprenant au moins un graphite lamellaire et au moins un polymère thermoplastique, ledit procédé comprenant les étapes successives suivantes :

   (a) le tamisage à sec de la composition au moyen d'un tamis dont le diamètre de mailles est inférieur ou égal à 1000 $\mu$m,
   (b) le mélangeage à sec de la composition tamisée,
   (c) le dépôt de la composition mélangée dans un moule, ce moule étant de préférence préchauffé,
   (d) le moulage par thermocompression de la composition mélangée avec chauffage par induction du moule, et
   (e) le démoulage de la composition thermocomprimée conduisant à l'obtention de la plaque bipolaire composite.

2. Procédé de fabrication selon la revendication 1, dans lequel le diamètre de mailles du tamis est compris entre 100 $\mu$m et 600 $\mu$m, avantageusement entre 200 $\mu$m et 500 $\mu$m et, préférentiellement, entre 250 $\mu$m et 400 $\mu$m.

3. Procédé de fabrication selon la revendication 1 ou 2, dans lequel l'étape (d) est réalisée par application d'une pression comprise $5.10^7$ Pa et $15.10^7$ Pa, le moule étant chauffé à une température supérieure à la température de fusion du polymère thermoplastique.

4. Procédé de fabrication selon l'une quelconque des revendications 1 à 3, dans lequel la composition comprend, les pourcentages massiques étant rapportés à la masse totale de la composition :

   - au moins 70% dudit au moins un graphite lamellaire, et
   - au moins 10% dudit au moins un polymère thermoplastique.

5. Procédé selon la revendication 4, dans lequel le pourcentage massique en graphite(s) lamellaire(s) est compris entre 75% et 90%, avantageusement entre 80% et 88% et, de préférence, entre 82% et 86%, par rapport à la masse totale de la composition.

6. Procédé selon la revendication 4 ou 5, dans lequel le pourcentage massique en polymère(s) thermoplastique(s) est compris entre 11% et 25%, avantageusement entre 12% et 20% et, de préférence, entre 14% et 18%, par rapport à la masse totale de la composition.

7. Procédé selon l'une quelconque des revendications 1 à 6, dans lequel chaque graphite lamellaire se présente sous la forme de particules dont au moins 90% en nombre ont une taille moyenne de particules $d_{90}$ comprise entre de 1 $\mu$m à 300 $\mu$m, avantageusement entre 5 $\mu$m et 200 $\mu$m et, de préférence, entre 10 $\mu$m et 180 $\mu$m.

8. Procédé selon l'une quelconque des revendications 1 à 7, dans lequel chaque polymère thermoplastique est choisi parmi une polyoléfine, un fluoropolymère et un poly(sulfure de phénylène) (PPS) et est, de préférence, un fluoropolymère, par exemple un polyfluorure de vinylidène (PVDF) ou un poly(fluorure de vinylidène-hexafluoropropylène) (PVDF-HFP).

9. Procédé selon l'une quelconque des revendications 1 à 8, dans lequel chaque polymère thermoplastique se présente sous la forme de particules dont au moins 90% en nombre ont une taille moyenne de particules $d_{90}$ comprise entre 1 $\mu$m et 200 $\mu$m, avantageusement entre 2 $\mu$m et 100 $\mu$m et, de préférence, entre 3 $\mu$m et 50 $\mu$m.

10. Procédé selon l'une quelconque des revendications 1 à 9, dans lequel chaque graphite lamellaire et chaque polymère thermoplastique se présentent sous la forme de particules dont au moins 90% en nombre ont une taille moyenne de particules $d_{90}$ comprise dans le même intervalle, de préférence entre 1 $\mu$m et 300 $\mu$m.

11. Procédé selon l'une quelconque des revendications 1 à 10, dans lequel la composition comprend, en outre, au moins un additif électriquement conducteur non métallique, chaque additif étant avantageusement choisi parmi un graphite expansé, un graphite lamellaire, du noir de carbone, du charbon actif, des fibres de carbone, des nanotubes de carbone et leurs mélanges et étant, de préférence, un graphite expansé.

12. Procédé selon la revendication 11, dans lequel le pourcentage massique en additif(s) représente jusqu'à 10% de la masse totale de la composition, est avantageusement compris entre 2% et 5% et, de préférence, entre 3% et 4%, par rapport à la masse totale de la composition.

**13.** Plaque bipolaire composite obtenue par le procédé selon l'une quelconque des revendications 1 à 12.

**14.** Utilisation de la plaque bipolaire composite selon la revendication 13, dans une pile à combustible, notamment dans une pile à combustible à membrane électrolyte polymère (PEMFC), par exemple dans une pile à combustible à méthanol direct (DMFC).

**15.** Pile à combustible comprenant au moins une plaque bipolaire composite selon la revendication 13, cette pile à combustible pouvant être une pile à combustible à membrane électrolyte polymère (PEMFC) et, notamment, une pile à combustible à méthanol direct (DMFC).

**Patentansprüche**

**1.** Verfahren zum Herstellen einer bipolaren Verbundplatte aus einer Zusammensetzung mit zumindest einem Lamellengraphit und zumindest einem thermoplastischen Polymer, wobei das Verfahren die nachstehenden, aufeinanderfolgenden Schritte umfasst:

(a) Trockensieben der Zusammensetzung mittels eines Siebs, dessen Maschenweite geringer oder gleich 1000 $\mu$m ist,
(b) Trockenvermischen der gesiebten Zusammensetzung,
(c) Einbringen der vermischten Zusammensetzung in eine Gießform, wobei diese Gießform vorzugsweise vorgeheizt wird,
(d) Formen unter Thermokompression der vermischten Zusammensetzung mit Induktionserwärmung der Gießform, und
(e) Entformen der thermokomprimierten Zusammensetzung, was zum Erhalt der bipolaren Verbundplatte führt.

**2.** Herstellungsverfahren nach Anspruch 1, wobei die Maschenweite des Siebs zwischen 100 $\mu$m und 600 $\mu$m, vorteilhaft zwischen 200 $\mu$m und 500 $\mu$m und vorzugsweise zwischen 250 $\mu$m und 400 $\mu$m liegt.

**3.** Herstellungsverfahren nach Anspruch 1 oder 2, wobei der Schritt (d) durch Aufbringen eines Drucks zwischen $5.10^7$ Pa und $15.10^7$ Pa erfolgt, wobei die Gießform auf eine Temperatur erhitzt wird, die höher als die Schmelztemperatur des thermoplastischen Polymers ist.

**4.** Herstellungsverfahren nach einem der Ansprüche 1 bis 3, wobei die Zusammensetzung in Masseprozent bezogen auf die Gesamtmasse der Zusammensetzung enthält:

- zumindest 70 % an dem zumindest einen Lamellengraphit, und
- zumindest 10 % an dem zumindest einen thermoplastischen Polymer.

**5.** Verfahren nach Anspruch 4, wobei der Masseprozentsatz an Lamellengraphit(en) zwischen 75 % und 90 %, vorteilhaft zwischen 80 % und 88 % und vorzugsweise zwischen 82 % und 86 % bezogen auf die Gesamtmasse der Zusammensetzung liegt.

**6.** Verfahren nach Anspruch 4 oder 5, wobei der Masseprozentsatz an thermoplastischem (thermoplastischen) Polymer(en) zwischen 11 % und 25 %, vorteilhaft zwischen 12 % und 20 % und vorzugsweise zwischen 14 % und 18 % bezogen auf die Gesamtmasse der Zusammensetzung liegt.

**7.** Verfahren nach einem der Ansprüche 1 bis 6, wobei jedes Lamellengraphit in Form von Teilchen vorliegt, von denen zahlenmäßig zumindest 90 % eine mittlere Teilchengröße $d_{90}$ zwischen 1 $\mu$m und 300 $\mu$m, vorteilhaft zwischen 5 $\mu$m und 200 $\mu$m und vorzugsweise zwischen 10 $\mu$m und 180 $\mu$m haben.

**8.** Verfahren nach einem der Ansprüche 1 bis 7, wobei jedes thermoplastische Polymer ausgewählt ist aus Polyolefin, Fluorpolymer und Polyphenylsulfid (PPS) und vorzugsweise Fluorpolymer, beispielsweise Polyvinylidenfluorid (PVDF) oder Polyvinylidenfluorid-Hexafluorpropylen (PVDF-HFP) ist.

**9.** Verfahren nach einem der Ansprüche 1 bis 8, wobei jedes thermoplastische Polymer in Form von Teilchen vorliegt, von denen zahlenmäßig zumindest 90 % eine mittlere Teilchengröße $d_{90}$ zwischen 1 $\mu$m und 200 $\mu$m, vorteilhaft zwischen 2 $\mu$m und 100 $\mu$m und vorzugsweise zwischen 3 $\mu$m und 50 $\mu$m haben.

**10.** Verfahren nach einem der Ansprüche 1 bis 9, wobei jedes Lamellengraphit und jedes thermoplastische Polymer in Form von Teilchen vorliegen, von denen zahlenmäßig zumindest 90 % eine mittlere Teilchengröße $d_{90}$ im gleichen Bereich vorzugsweise zwischen 1 $\mu$m und 300 $\mu$m haben.

**11.** Verfahren nach einem der Ansprüche 1 bis 10, wobei die Zusammensetzung ferner zumindest ein nicht metallisches, elektrisch leitfähiges Additiv enthält, wobei jedes Additiv vorteilhaft ausgewählt ist aus expandiertem Graphit, Lamellengraphit, Ruß, Aktivkohle, Kohlenstofffasern, Kohlenstoffnanoröhrchen und deren Gemische und vorzugsweise ein expandiertes Graphit ist.

**12.** Verfahren nach Anspruch 11, wobei der Masseprozentsatz an Additiv(en) bis zu 10 % der Gesamtmasse der Zusammensetzung beträgt und vorteilhaft zwischen 2 % und 5 %, vorzugsweise zwischen 3 % und 4 % bezogen auf die Gesamtmasse der Zusammensetzung liegt.

**13.** Bipolare Verbundplatte, erhalten mit dem Verfahren nach einem der Ansprüche 1 bis 12.

**14.** Verwendung der bipolaren Verbundplatte nach Anspruch 13 bei einer Brennstoffzelle, insbesondere bei einer Polymerelektrolyt-Membran-Brennstoffzelle (PEMFC), beispielsweise bei einer Direkt-Methanol-Brennstoffzelle (DMFC).

**15.** Brennstoffzelle mit zumindest einer bipolaren Verbundplatte nach Anspruch 13, wobei diese Brennstoffzelle eine Polymerelektrolyt-Membran-Brennstoffzelle (PEMFC) und insbesondere eine Direkt-Methanol-Brennstoffzelle (DMFC) sein kann.

**Claims**

**1.** A method for manufacturing a composite bipolar plate from a composition comprising at least one lamellar graphite and at least one thermoplastic polymer, said method comprising the following successive steps:

(a) dry sieving of the composition by means of a sieve for which the mesh diameter is less than or equal to 1,000 $\mu$m,
(b) dry blending of the sieved composition,
(c) deposition of the blended composition in a mold, this mold being preferably pre-heated,
(d) molding by thermocompression of the blended composition with induction heating of the mold, and
(e) removal from the mold of the thermocompressed composition leading to the obtaining of the composite bipolar plate.

**2.** The manufacturing method according to claim 1, wherein the mesh diameter of the sieve is comprised between 100 $\mu$m and 600 $\mu$m, advantageously between 200 $\mu$m and 500 $\mu$m and, preferentially, between 250 $\mu$m and 400 $\mu$m.

**3.** The manufacturing method according to claim 1 or 2, wherein step (d) is carried out by applying a pressure comprised between $5.10^7$ Pa and $15.10^7$ Pa, the mold being heated to a temperature above the melting temperature of the thermoplastic polymer.

**4.** The manufacturing method according to any of claims 1 to 3, wherein the composition comprises, the mass percentages being based on the total mass of the composition:

- at least 70% of said at least one lamellar graphite, and
- at least 10% of said at least one thermoplastic polymer.

**5.** The method according to claim 4, wherein the mass percentage of lamellar graphite(s) is comprised between 75% and 90%, advantageously between 80% and 88% and, preferably, between 82% and 86%, based on the total mass of the composition.

**6.** The method according to claim 4 or 5, wherein the mass percentage of thermoplastic polymer(s) is comprised between 11% and 25%, advantageously between 12% and 20% and, preferably, between 14% and 18%, based on the total mass of the composition.

7. The method according to any of claims 1 to 6, wherein each lamellar graphite appears as particles for which at least 90% in number have an average particles size $d_{90}$ comprised between 1 $\mu$m and 300 $\mu$m, advantageously between 5 $\mu$m and 200 $\mu$m and, preferably, between 10 $\mu$m and 180 $\mu$m.

8. The method according to any of claims 1 to 7, wherein each thermoplastic polymer is selected from a polyolefin, a fluoropolymer and a poly(phenylene sulfide) (PPS) and is, preferably, a fluoropolymer, for example a polyvinylidene fluoride (PVDF) or a poly(vinylidene fluoride-hexafluoropropylene) (PVDF-HFP).

9. The method according to any of claims 1 to 8, wherein each thermoplastic polymer appears as particles for which at least 90% in number have an average particles size $d_{90}$ comprised between 1 $\mu$m and 200 $\mu$m, advantageously between 2 $\mu$m and 100 $\mu$m and, preferably, between 3 $\mu$m and 50 $\mu$m.

10. The method according to any of claims 1 to 9, wherein each lamellar graphite and each thermoplastic polymer appear as particles for which at least 90% in number have an average particles size $d_{90}$ comprised in the same interval, preferably between 1 $\mu$m and 300 $\mu$m.

11. The method according to any of claims 1 to 10, wherein the composition further comprises at least one non-metal electrically conductive additive, each additive being advantageously selected from among an expanded graphite, a lamellar graphite, carbon black, active coal, carbon fibers, carbon nanotubes and mixtures thereof and being, preferably, an expanded graphite.

12. The method according to claim 11, wherein the mass percentage of additive(s) represent up to 10% of the total mass of the composition, is advantageously comprised between 2% and 5% and, preferably, between 3% and 4%, based on the total mass of the composition.

13. A composite bipolar plate obtained by the method according to any of claims 1 to 12.

14. The use of the composite bipolar plate according to claim 13, in a fuel cell, notably in a polymeric electrolyte membrane fuel cell (PEMFC), for example in a direct methanol fuel cell (DMFC).

15. A fuel cell comprising at least one composite bipolar plate according to claim 13, this fuel cell may be a polymeric electrolyte membrane fuel cell (PEMFC) and notably a direct methanol fuel cell (DMFC).

FIG.1

FIG.2

FIG.3

FIG.4

**RÉFÉRENCES CITÉES DANS LA DESCRIPTION**

**Documents brevets cités dans la description**

- US 7494740 B
- EP 1750320 A